Europäisches Patentamt

European Patent Office

Office européen des brevets

(19)

(11) Numéro de publication: **0 068 940**

**B1**

(12) **FASCICULE DE BREVET EUROPÉEN**

(45) Date de publication du fascicule du brevet:
25.01.89

(21) Numéro de dépôt: 82401015.1

(22) Date de dépôt: 04.06.82

(51) Int. Cl.⁴: **H 01 Q 25/04, H 01 P 1/213, G 01 S 3/14**

(54) Source primaire à réutilisation de fréquences.

(30) Priorité: 11.06.81 FR 8111481

(43) Date de publication de la demande:
05.01.83 Bulletin 83/1

(45) Mention de la délivrance du brevet:
25.01.89 Bulletin 89/4

(84) Etats contractants désignés:
AT BE CH DE GB IT LI NL SE

(56) Documents cité:
DE-A-2 757 115
FR-A-2 442 518
GB-A-2 059 170
US-A-3 560 976
US-A-3 665 481
US-A-3 696 434
US-A-3 731 236
US-A-4 162 463
US-A-4 233 576

AP-S INTERNATIONAL SYMPOSIUM, 21 juin 1977, pages 341-344, Institute of Electrical and Electronics Engineers, Stanford Californie IEEE, New York, USA R.W. GRUNER: "Compact dual-polarized diplexers for 4/6-GHz earth station applications"

(73) Titulaire: ALCATEL THOMSON FAISCEAUX HERTZIENS Société Anonyme dite, 55, rue Greffulhe, F-92301 Levallois- Perret Cedex (FR)

(72) Inventeur: Bui, Hai Nhu, THOMSON- CSF SCPI 173, bld. Haussmann, F-75379 Paris Cedex 08 (FR)

(74) Mandataire: Weinmiller, Jürgen, Lennéstrasse 9 Postfach 24, D-8133 Feldafing (DE)

EP 0 068 940 B1

LIBER, STOCKHOLM 1989

## Description

La présente invention se rapporte à une source primaire à très large bande pour antenne de communications spatiales et plus précisément pour antenne de station terrienne fonctionnant avec réutilisation de fréquences, c'est-à-dire avec utilisation d'une même bande de fréquences dans deux polarisations orthogonales.

Les communications spatiales utilisent actuellement deux groupes de bandes de fréquences. Dans le premier groupe la liaison montante, appelée "émission" dans ce qui suit, s'effectue entre 5,925 et 6,425 GHz et la liaison descendante, appelée "réception" dans ce qui suit, s'effectue entre 3,7 et 4,2 GHz. Dans le second groupe la liaison montante ou "émission" s'effectue entre 14 et 14,5 GHz et la liaison descendante ou "réception" entre 10,95 et 11,7 GHz.

Depuis peu, il est question d'élargir les bandes de fréquences pour permettre d'augmenter la capacité de transmission; or ces nouvelles bandes sont nettement plus larges puisque la bande pour l'émission va de 5,85 à 7,075 GHz et la bande pour la "réception" de 3,4 à 4,2 GHz et de 4,5 à 4,8 GHz.

Les sources primaires connues, dont deux exemples seront donnés plus loin ne permettent pas de passer ces bandes, d'autant plus que les performances souhaitées sont supérieures ou au moins égales à celles obtenues avec les sources primaires existantes à réutilisation de fréquences.

Un brevet américain US-A-3 696 434 décrit une structure où les éléments se trouvent connectés dans la suite ci-après:
- un cornet à rainures,
- une section de guide où est appliqué le signal à transmettre (1,75 - 1,85 GHz),
- une transition,
- une section de guide qui laisse passer le signal à recevoir (2,2 - 2,3 GHz) et arrête le signal à transmettre (1,75 - 1,85 GHz),
- une transition,
- une section de guide d'où sont extraites les ondes différence du signal à recevoir (modes $TE_{11}$ + $TM_{11}$ et $TE_{20}$) grâce à des sondes suivies de circuits hydrides afin de passer en polarisation circulaire,
- une section de guide d'où est extrait le mode $TE_{10}$ du signal à recevoir grâce à un coupleur orthogonal suivi d'un circuit hybride afin de séparer les deux polarisations linéaires et de passer en polarisation circulaire.

L'objet de la présente invention est une source primaire nécessitant un extracteur de mode et capable de travailler dans les nouvelles bandes de fréquences indiquées ci-avant.

Cette source primaire selon l'invention est obtenue, en particulier, en disposant l'extracteur de mode dans la voie réception uniquement.

Pour permettre un fonctionnement dans une très large bande, l'invention propose une source primaire à réutilisation de fréquences, comprenant:

- un cornet rainuré,
- une jonction orthomode,
- une voie de réception reliée à un troisième accès de ladite jonction, ledit accès étant couplé à l'entrée d'un extracteur de modes supérieurs dont la sortie est connectée à une entrée d'un duplexeur de réception,
- et un duplexeur d'émission relié en sortie à un deuxième accès de ladite jonction, caractérisé en ce
- qu'un polariseur ½ d'émission et un polariseur ½ de réception sont connectés en série et sont intercalés entre l'accès audit cornet et un premier accès de ladite jonction,
- qu'un filtre est relié à chaque sortie du duplexeur de réception,
- que le cornet comprend deux types de rainures régulièrement alternées dont la profondeur diminue, pour chacun des deux types, du col vers l'ouverture, et
- que ladite jonction comporte un dipole métallique croisé perpendiculaire à l'axe longitudinal du guide circulaire dont l'extrémité forme le premier accès de la jonction, ce dipole étant disposé en amont de la voie de réception.

L'invention sera mieux comprise et d'autres caractéristiques apparaîtront à l'aide de la description ci-après et des figures s'y rapportant qui représentent:
- les figures 1 et 2 des sources primaires selon l'art connu,
- la figure 3 une source primaire selon l'invention,
- les figures 4 et 5 des vues de détail de certains éléments selon la figure 3.

Sur les différentes figures les éléments semblables portent les même repères.

Les principales réalisations connues de sources primaires à réutilisation de fréquences utilisant un extracteur de mode peuvent être classées en deux catégories qui se différencient entre elles par l'emploi ou non de polariseurs couvrant à la fois les bandes 3,7 - 4,2 GHz et 5,925 - 6,425 GHz et qui seront dits dans ce qui suit polariseurs à large bande par opposition à des polariseurs couvrant des bandes plus étroites telles que 3,7 - 4,2 GHz, 5,925 - 6,425 GHz, 3,4 - 4,8 GHz, 5,85 - 7,075 GHz.

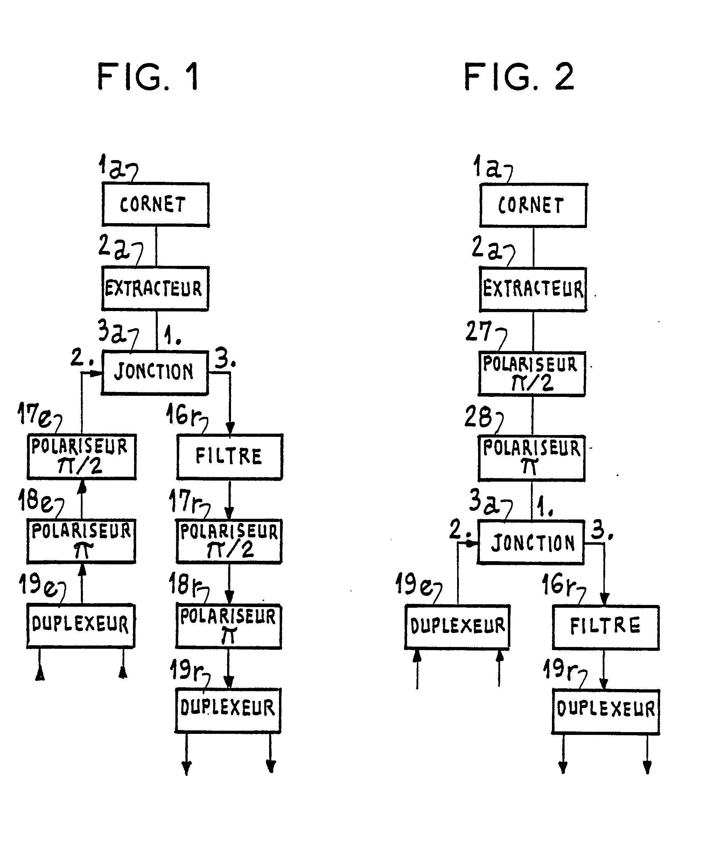

La figure 1 est relative à une source primaire n'utilisant pas un polariseur à large bande. Dans cette source les polariseurs sont distincts un pour la bande "réception" 3,7 - 4,2 GHz et un pour la bande "émission" 5,925 - 6,425 GHz.

La figure 1 représente un cornet 1a couplé, à travers un extracteur de mode, au premier accès (1.) d'un séparateur de bandes aussi appelé jonction orthomode, $3_a$ (orthomode junction ou OMJ dans la littérature anglo-saxonne). Des deuxième et troisième accès (2. et 3.) de la jonction orthomode $3_a$ partent deux voies: une voie émission et une voie réception.

Le cornet 1a est un cornet à rainures (corrugated horn dans la littérature anglo-saxonne) classique: il couvre les deux bandes 3,7 - 4,2 GHz et 5,925 - 6,425 GHz.

L'extracteur de mode $2_a$ (higher mode coupler dans la littérature anglo-saxonne) a pour rôle de permettre d'extraire les signaux des modes spécifiques à la poursuite et qui se trouvent dans la bande "réception" 3,7 - 4,2 GHz. Comme il reçoit également les signaux de la bande "émission" pour les transmettre au cornet, il doit passer aussi la bande "émission" 5,925 - 6,425 GHz. C'est donc un élément très important et qui doit être très performant. Il est par conséquent difficile à réaliser en raison de sa large bande passante:

3,7 - 4,2 GHz et 5,925 - 6,425 GHz soit Fmax/Fmin: $\frac{6,425}{3,7} = 1,736$

Le rôle de la jonction orthomode $3_a$ est de grouper la réception et l'émission pour n'avoir qu'un seul cornet; elle est réalisée de diverses façons généralement à partir de filtres ou de coupleurs directifs.

La voie réception comporte, en série entre le troisième accès de la jonction $3_a$ et les deux accès "réception" de la source primaire un filtre de réjection, $16_r$, un polariseur $\frac{\pi}{2}$, $17_r$, un polariseur $\pi$, $18_r$, et un duplexeur de polarisation $19_r$ dont les accès de polarisation horizontale et verticale constituent les deux accès "réception" de la source primaire.

Le filtre de réjection, $16_r$, arrête la bande émission (5,925 - 6,425 GHz) ne laissant passer que la bande réception (3,7 - 4,2 GHz).

Le polariseur, $17_r$, ne couvre que la bande 3,7 - 4,2 GHz ou Fmax/Fmin: 4,2/3,7 $\approx$ 1,135; c'est un polariseur de type $\frac{\pi}{2}$ qui permet de transformer le champ à polarisation circulaire provenant du cornet en un champ à polarisation rectiligne.

Le polariseur, $18_r$, de type "$\frac{\pi}{2} + \frac{\pi}{2} = \pi$", permet de compenser électro-mécaniquement la dépolarisation lorsque la station dans laquelle se trouve la source primaire est équipée d'un système de détection de cette dépolarisation; il n'existe donc pas toujours dans les montages connus.

Le duplexeur de polarisation (orthomode transducer ou OMT dans la littérature anglo-saxonne), $19_r$, permet de séparer les deux polarisations linéaires orthogonales de l'onde provenant des polariseurs $17_r$, $18_r$.

La voie émission comporte, en série entre les deux accès "émission" de la source primaire et le deuxième accès de la jonction $3_a$: un duplexeur de polarisation $19_e$ dont les accès de polarisation horizontale et de polarisation verticale constituent les deux accès "émission" de la source primaire, un polariseur $\pi$, $18_e$ et un polariseur $\frac{\pi}{2}$, $17_e$.

Dans la voie émission le duplexeur de polarisation $19_e$ permet de mélanger les deux polarisations linéaires orthogonales des ondes appliquées sur ses deux accès de polarisation: le polariseur $18_e$ de type "$\frac{\pi}{2} + \frac{\pi}{2} = \pi$" a le même rôle que le polariseur $18_r$ de la voie réception; quant au polariseur $17_e$ qui est un polariseur de type $\frac{\pi}{2}$ il ne couvre que la bande 5,925 - 6,425 GHz où Fmax/Fmin $\approx$ 1,0843.

La figure 2 est relative à une source primaire connue utilisant un polariseur à large bande, commun aux voies émission et réception et couvrant donc les bandes 3,7 - 4,2 GHz et 5,925 - 6,425 GHz.

La figure 2 représente un cornet 1a couplé, à travers un extracteur de mode $2_a$, suivi d'un polariseur à large bande, 27, de type $\frac{\pi}{2}$, lui même suivi d'un polariseur, 28, de type "$\frac{\pi}{2} + \frac{\pi}{2} = \pi$", au premier accès d'une jonction orthomode $3_a$. Des deuxième et troisième accès de la jonction orthomode $3_a$ partent deux voies: une voie émission et une voie réception.

Le cornet 1a et l'extracteur de mode $2_a$ de la figure 2 sont respectivement identiques à ceux de la figure 1.

Le polariseur à large bande, comme il a été indiqué plus haut, couvre les bandes 3,7 - 4,2 GHz et 5,925 - 6,425 GHz (soit Fmax/Fmin = $\frac{6,425}{3,7}$ 1,736); c'est un élément difficile à réaliser et donc très coûteux.

Le polariseur de type $\pi$, 28, a le même rôle que les polariseurs $18_r$, $18_e$ de la figure 1 mais est plus difficile à réaliser en raison de sa plus grande bande de fréquences de fonctionnement.

La jonction orthomode $3_a$ a le même rôle que la jonction $3_a$ de la figure 1.

La voie réception de la source primaire selon la figure 2 comporte en série un filtre de réjection $16_r$ et un duplexeur de polarisation $19_r$ identiques tant en ce qui concerne leur constitution que leur rôle au filtre $16_r$ et au duplexeur $19_r$ selon la figure 1. De même la voie émission de la source primaire selon la figure 2 comporte un duplexeur de polarisation $19_e$, identique au duplexeur $19_e$ de la figure 1.

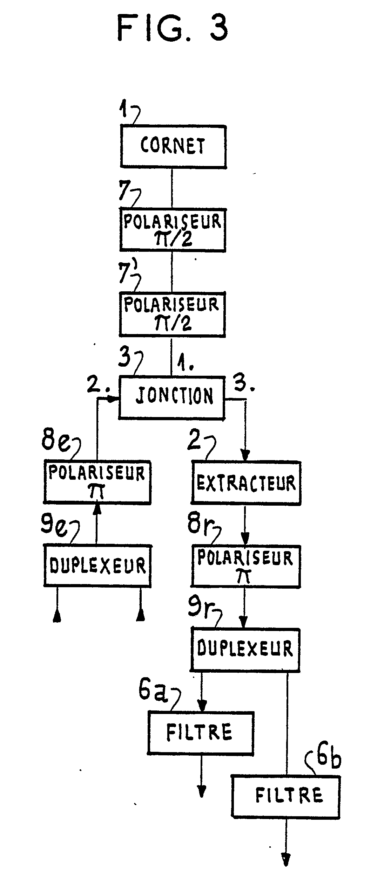

La figure 3 est relative à une source primaire destinée à fonctionner à des fréquences allant de 3,4 à 7,075 GHz, c'est-à-dire correspondant à plus d'une octave: $\frac{7,075}{3,4} \approx 2,08$.

La figure 3 représente un cornet 1 auquel est connecté le premier accès d'une jonction orthomode 3 au travers de deux polarisateurs $\frac{\pi}{2}$ 7 et 7'.

Il est à noter que, pour des raisons de facilité de réalisation, deux polariseurs de type $\frac{\pi}{2}$ ont été utilisés: un polariseur, 7, destiné à la bande 4 - 7,075 GHz et un polariseur, 7', destiné à la bande 3,4 - 4 GHz. Cette réalisation a l'avantage de réduire au minimum la distance entre le filtre quasi-optique de la jonction orthomode 3 (ou séparateur de bandes) et les filtres à réjection $6_a$, $6_b$; ceci permet d'éviter les résonances qui seraient dues aux signaux "émission" qui auraient pu passer à travers le filtre quasi-optique de la jonction orthomode 3 en direction de la voie réception".

Des deuxième et troisième accès de la jonction 3 partent deux voies: une voie émission et une voie réception.

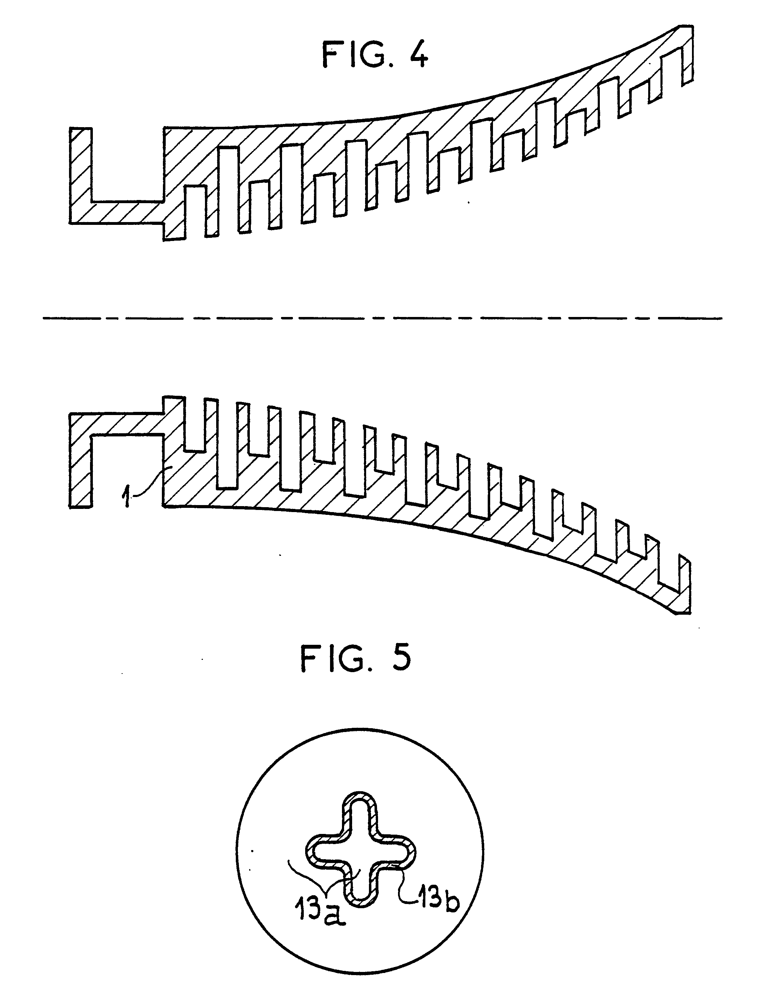

Le cornet 1 est un cornet à deux types de rainures régulièrement alternées dont la profondeur diminue, pour chacun des deux types, du col du cornet vers son ouverture. Des cornets de ce type sont décrits dans la demande de brevet français n° 79 11316 du 4 mai 1979. La figure 4 montre, dans une vue en coupe longitudinale, comment est constitué le cornet 1 de la figure 3; ce cornet présente un diamètre d'ouverture de 1000 mm et une longueur de la partie rainurée de 3000 mm; sur la figure 4 les proportions n'ont pas été respectées pour mieux faire ressortir la variation de profondeur des rainures.

La jonction orthomode 3 comporte un premier guide d'ondes circulaire dont une extrémité est couplée au cornet 1 et dont l'autre extrémité constitue l'accès de la voie réception; ce premier guide circulaire présente quatre fentes latérales disposées à un même niveau et décalées de 90° les unes par rapport aux autres; des guides rectangulaires relient ces quatre fentes par paires opposées, à travers deux Tés-magiques, aux paires opposées de quatre fentes latérales d'un second guide circulaire; ce second guide circulaire, dont les fentes latérales sont disposées comme sur le premier guide, est court-circuité à l'une de ses extrémités et a son autre extrémité qui constitue l'accès de la voie émission. A l'intérieur du premier guide circulaire de la jonction orthomode 3, entre les fentes latérales et l'accès de la voie réception, se trouve un jeu de filtres quasi-optiques; chacun de ces filtres est, comme le montre la figure 5 constitué par un dipôle métallique croisé, $13_b$, déposé sur un support diélectrique, $13_a$ , formé d'une feuille en oxyde de beryllium, solidaire de la paroi du guide cylindrique; cette feuille est perpendiculaire à l'axe longitudinal du guide circulaire.

La figure 3 montre que la voie réception comporte, entre le troisième accès de la jonction 3 et les deux accès réception de la source primaire: un extracteur de mode, 2, un polariseur de type $\pi$, $8_r$, un duplexeur de polarisation, 9r dont les deux accès de polarisation sont respectivement couplés aux deux accès de réception de la source primaire par deux filtres réjecteurs $6_a$, $6_b$. La voie émission, quant à elle, comporte, en série à partir des deux accès émission de la source primaire, un duplexeur de polarisation, $9_e$, et un polariseur de type $\pi$, $8_e$, couplé au deuxième accès de la jonction orthomode 3.

Il est à remarquer sur la figure 3 que l'extracteur de mode, 2, à l'inverse des extracteurs de mode, $2_a$, des figures 1 et 2 se trouve situé uniquement dans la voie réception; il n'a donc à couvrir que la bande 3,4 - 4,8 GHz, (Fmax/Fmin = 1,41) qui est une bande nettement plus étroite que celle des autres versions connues. Il présente de plus l'avantage de ne pas être traversé par la puissance de la bande émission. De ce fait, sa conception est plus simple et son coût moindre pour de meilleurs performances.

Le polariseur réception $8_r$ de la figure 3 a à couvrir une bande plus étroite que les polariseurs réception selon la figure 2; sa conception est donc également plus simple et son coût moindre pour des performances meilleures.

Les duplexeurs de polarisation réception 9r, et émission, $9_e$, sont sans changement par rapport aux autres versions connues existantes (figures 1 et 2).

Quant au polariseur émission $8_e$ la bande qu'il a à couvrir est limitée à la bande émission (Fmax/Fmin = $\frac{7.075}{5.85}$ = 1,21) et est donc nettement plus étroite que celle des polariseurs de la version à large bande précitée (figure 2). Il est donc, lui aussi, plus simple et d'un prix de revient inférieur pour de meilleures performances c'est-à-dire pour des pertes plus faibles et un meilleur taux d'ellipticité.

L'invention n'est pas limitée aux exemples décrits à l'aide des figures 3 à 5, c'est ainsi qu'elle peut s'appliquer à d'autres bandes de fréquences.

## Revendications

1. Source primaire à réutilisation de fréquences, comprenant:
 - un cornet rainuré (1)
 - une jonction orthomode (3)
 - une voie de réception reliée à un troisième accès (3.) de ladite jonction, ledit accès étant couplé à l'entrée d'un extracteur (2) de modes supérieurs dont la sortie est connectée à une entrée d'un duplexeur (9r) de réception,
 - et un duplexeur d'émission relié en sortie à un deuxième accès (2.) de ladite jonction, caractérisée en ce
 - qu'un polariseur $\frac{\pi}{2}$ (7) d'émission et un polariseur $\frac{\pi}{2}$ (7' ) de réception sont connectés en série et sont intercalés entre l'accès audit cornet (1) et un premier accès (1.) de ladite jonction (3),
 - qu'un filtre (6a, 6b) est relié à chaque sortie du duplexeur de réception ($9_r$),
 - que le cornet comprend deux types de rainures régulièrement alternées dont la profondeur diminue, pour chacun des deux types, du col vers l'ouverture, et
 - que ladite jonction (3) comporte un dipôle métallique croisé (13b) perpendiculaire à l'axe longitudinale du guide circulaire dont l'extrémité forme le premier accès de la jonction (3), ce dipôle étant disposé en amont de la voie de réception.

2. Source primaire selon la revendication 1, caractérisée en ce que le dipôle métallique croisé (13b) est déposé sur un support diélectrique (13a) formé d'une feuille en oxyde de béryllium.

## Patentansprüche

1. Primärstrahler mit Frequenz-Doppelausnutzung, und mit:
 - einem Horn (1) mit Rillen,
 - einem orthomodalen Übergang (3),
 - einem Empfangskanal, der mit einem dritten Anschluß (3) des Übergangs verbunden ist, wobei dieser Anschluß an den Anschluß eines Extraktors (2) für höhere Modi angekoppelt ist, dessen Auslaß an einen Einlaß eines Empfangsduplexers (9r) angeschlossen ist,

- und einem Sendeduplexer, der auslaßseitig an einen zweiten Anschluß (2.) des Übergangs angeschlossen ist,

dadurch gekennzeichnet, daß

- ein π/2- Sendepolarisator (7) und ein π/2-Empfangspolarisator (7') in Reihe zwischen den Anschluß des Horns (1) und einen ersten Anschluß (1.) des Übergangs (3) geschaltet sind,

- ein Filter (6a, 6b) mit jedem Auslaß des Empfangsduplexers (9r) verbunden ist,

- das Horn zwei Arten von regelmäßig einander abwechselnden Rillen umfaßt, deren Tiefe bei jedem der beiden Typen vom Hals bis zur Öffnung abnimmt,

- und daß der Übergang (3) einen metallischen Kreuzdipol (13b) senkrecht zur Längsachse des kreisförmigen Hohlleiters aufweist, dessen Ende den ersten Anschluß des Übergangs (3) bildet, wobei der Dipol vor dem des Empfangskanals angeordnet ist.

2. Primärstrahler nach Anspruch 1, dadurch gekennzeichnet, daß der metallische Kreuzdipol (13b) auf einen dielektrischen Träger (13a) aufgebracht ist, der von einem Berylliumoxidblatt gebildet wird.

## Claims

1. A primary source applying frequency re-use, comprising

- a corrugated horn (1),
- an orthomode junction (3),
- a reception channel connected to a third access (3.) of said junction, the access being coupled to the input of a higher modes extractor (2), the output of which is connected to an input of a reception duplexer (9r),
- and a transmission duplexer output connected to a second access (2.) of said junction,

characterized in that

- a π/2 transmission polarizer (7) and a π/2 reception polarizer (7') are connected in series and mounted between the access to said horn (1) and a first access (1.) of said junction (3),

- a filter (6a, 6b) is connected to each output of the reception duplexer (9r),

- the horn comprises two types of evenly alternating grooves, the depths of which decrease, for each of the two types, from the neck towards the opening,

- and that said junction (3) comprises a crossed metal dipole (13b) disposed perpendicularly to the longitudinal axis of the circular wave guide, the end of which constitutes the first access of the junction (3), whereas the dipole is disposed upstream of the reception channel.

2. A primary source according to claim 1, characterized in that the crossed metal dipole (13b) is deposited on a dielectric support (13a), constituted by a beryllium oxide sheet.

# FIG. 1

**1a**
CORNET

**2a**
EXTRACTEUR

**3a** | **1.**
**2.** → JONCTION | **3.**

**17e**
POLARISEUR
π/2

**16r**
FILTRE

**18e**
POLARISEUR
π

**17r**
POLARISEUR
π/2

**19e**
DUPLEXEUR

**18r**
POLARISEUR
π

**19r**
DUPLEXEUR

# FIG. 2

**1a**
CORNET

**2a**
EXTRACTEUR

**27**
POLARISEUR
π/2

**28**
POLARISEUR
π

**3a** | **1.**
**2.** → JONCTION | **3.**

**19e**
DUPLEXEUR

**16r**
FILTRE

**19r**
DUPLEXEUR

# FIG. 3

# FIG. 4

# FIG. 5

13a  13b